# EUROPEAN PATENT APPLICATION

(11) **EP 1 897 756 A1**
(43) Date of publication of application: **12.03.2008**
(21) Application number: 07253267.4
(22) Date of filing: 20.08.2007
(51) Int. Cl.: B60R 7/04

(54) **Overhead system for a vehicle**

(30) Priority: 21.08.2006 US 507363
(71) Applicant: Johnson Controls Technology Company, Holland, MI 49423 (US)
(72) Inventor: Huisingh, Jack, Holland, Michigan 49423 (US); Werth, Jennifer A., Holland, Michigan 49423 (US); Busch, David B., Holland, Michigan 49424 (US); Dassen, Arne, Holland, Michigan 49424 (US)
(74) Representative: Marshall, Caroline

(57) **Abstract**

An overhead system (10) for a vehicle includes a substantially transparent panel (14) covering a portion of a roof area of the vehicle, and a pair of elongated members (30) coupled to the transparent panel or the structural portion of the vehicle, where the elongated members (30) are configured to receive a carriage that moves along a length of the pair of elongated members and holds one or more articles (20) for use by occupants of the vehicle.

## Description

### CROSS REFERENCE TO RELATED APPLICATIONS

The present Application claims the benefit of priority as a continuation-in-part of co-pending U.S. Patent Application No. 10/520,319, titled Overhead System for a Vehicle, filed on January 4, 2005, which claims the benefit of priority of International Patent Application No. PCT/US2003/026995, titled Overhead System for a Vehicle, filed on August 26, 2003, which claims the benefit of priority of U.S. Provisional Patent Application No. 60/406,243, titled Overhead System for a Vehicle, filed on August 27, 2002, the disclosure of which are all hereby incorporated by reference.

### FIELD

The present invention relates to an overhead system for a vehicle. The present invention relates more particularly to an overhead system for a vehicle having a transparent roof portion. The present invention relates more particularly to an overhead system having elongated rails for at least partially supporting the transparent roof portion and which may receive modular articles for use within the vehicle.

### BACKGROUND

Vehicles such as motor vehicles having transparent roof portions in the form of fixed or movable glass panels are generally known and include sun roofs, moon roofs, etc. Such known sun roofs or moon roofs are typically configured as a window-like opening in a relatively small portion of the roof structure and are generally limited to the area between structural members of the vehicle roof such as crossbows or headers. Such known window like openings typically provided a limited overhead view from the vehicle interior and are not practical for providing a panoramic overhead view from within the vehicle interior due to their limited size and constraints within the roof structure, and the need for structural strength within the roof panel. Further, such glass panels typically do not provide for attaching articles within the interior. Therefore, such known window like openings usually do not provide transparency for the entire roof portion or a substantial portion of the roof portion due to the structural requirements of the roof and the presence of the cross bows, headers, or other structural support features of the roof, and usually do not provide the adaptability to receive various articles for use by the vehicle occupants. Accordingly, due to advancement in interior vehicle design, it has become desirable to have glass roof panels that cover either a large or small portion of the roof area and are adapted to receive articles for use by the vehicle occupants.

Overhead systems with modular storage compartments in the forward portion of vehicles are also generally known and include consoles and structures for mounting items such as lamps, small storage compartments and electronic instrumentation such as compasses, temperature displays and clocks. Such modular systems typically have mounting configurations that permanently attach such articles to a structural portion of the vehicle, whereby installation of article options are typically conducted in a factory setting during vehicle construction and often requires user-selection of the desired articles prior to vehicle assembly, or user acceptance of preinstalled option packages. However, such modular systems typically are mounted to the vehicle roof structure and rely on the roof structure for support and thus do not provide the structural strength or support for the roof portion.

Accordingly, it would be advantageous to provide an overhead system having a transparent panel covering a small portion or a substantial portion of the roof area. It would also be advantageous to provide a support structure for the transparent panel within the vehicle interior that is adaptable for other uses within the vehicle. It would also be advantageous to provide an overhead system with a mounting system configured for interchangeably mounting a wide array of selectively removable, user-oriented articles that are adapted for use within, or in conjunction with, a vehicle. It would also be advantageous to provide such an overhead system along substantially the entire length of the interior overhead portion of a vehicle. It would also be advantageous to provide an overhead system that provides concealed distribution of utilities from vehicle utility supply sources to the interchangeably selected articles. It would be further advantageous to provide an overhead system whereby certain classes of articles are capable of installation only in predetermined portions of a vehicle area to minimize potential distractions to a vehicle operator.

### SUMMARY

One aspect of the present invention relates to an overhead system for a vehicle, including a generally transparent panel covering a portion of the roof area of the vehicle and a pair of elongated members adapted to engage at least one of the generally transparent panel and a structural portion of the vehicle, where the pair of elongated members is configured to receive a carriage for movement along the length of the pair of elongated members.

Another aspect of the present invention relates to a system for attaching articles to an overhead portion of an interior of a vehicle, including a generally transparent panel covering a portion of the roof area of the vehicle, an adaptor having an interface portion attached to the transparent panel by an adhesive material, and a fastening section extending from the interface portion. An article is coupled to the fastening section and supported from the transparent panel by the interface portion.

Another aspect of the present invention relates to an overhead system for a vehicle including at least one panel that is substantially see-through, and at least one elongated member coupled to the transparent panel and/or the structural portion of the vehicle, and a carrier element slidably engaging the elongated member and interchangeably receiving one or more articles for use by an occupant of the vehicle.

Another aspect of the present invention relates to an over head system for a vehicle including a transparent panel covering a portion of a roof area of the vehicle. At least one rail is coupled to the transparent panel or a structural portion of the vehicle. The rail includes a first portion on a first side of the transparent panel to receive articles for use within the vehicle interior, and a second portion on a second side of the transparent panel to secure cargo items to an exterior of the vehicle.

### BRIEF DESCRIPTION OF THE DRAWINGS

FIGURE 1 is a downward-looking perspective view of an overhead system mounted for a vehicle according to a preferred embodiment.

FIGURE 2 is an upward looking perspective view of an overhead system for a vehicle according to a preferred embodiment.

FIGURE 3 is a cross sectional view of the overhead system for a vehicle along lines 3-3 of FIGURE 1 according to a preferred embodiment.

FIGURE 4A is a cross sectional view of the overhead system for a vehicle along lines 4-4 of FIGURE 3 according to a preferred embodiment.

FIGURE 4B is a detail view of a portion of the overhead system for a vehicle according to a preferred embodiment.

FIGURE 5 is a cross sectional view of the overhead system for a vehicle along lines 4-4 of FIGURE 3 according to another preferred embodiment.

FIGURE 6A is a cross sectional view of the overhead system for a vehicle according to another preferred embodiment.

FIGURE 6B is a cross sectional view of the overhead system for a vehicle according to another preferred embodiment.

FIGURES 7A-7F are schematic illustrations of a plan view of elongated member arrangements of an overhead system for a vehicle according to various embodiments.

FIGURE 8 is a schematic illustrations of an elevational view of an overhead system with a carriage according to another embodiment.

FIGURE 9 is a schematic illustrations of an elevational view of an overhead system with carrier elements according to another embodiment.

### DETAILED DESCRIPTION

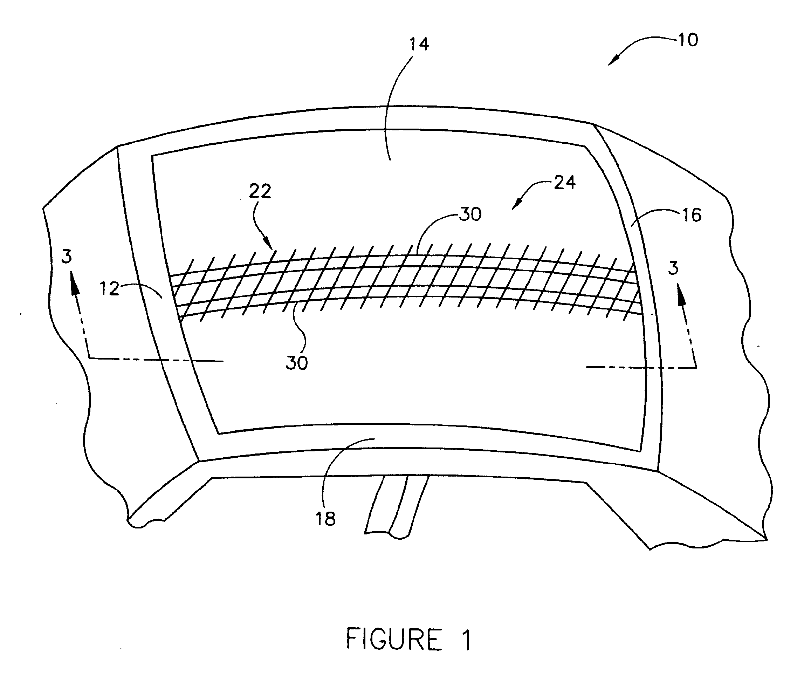

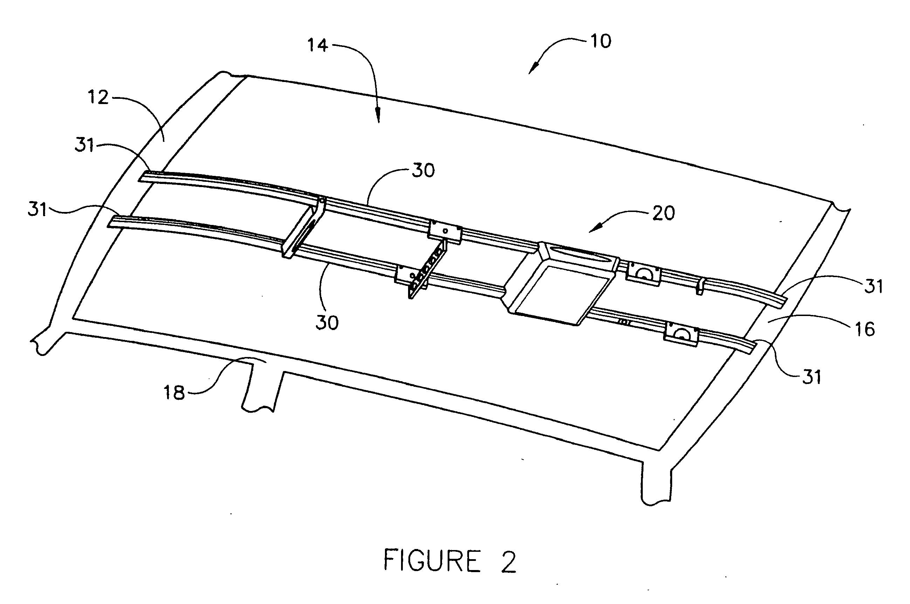

Referring to FIGURES 1 and 2, an overhead system 10 is shown according to a preferred embodiment. Overhead system 10 includes a roof surface or panel 14 made from a generally transparent or see-through material (e.g. glass, polymer, resin, etc.) provided in an overhead roof portion or area of the vehicle and supported by one or more elongated members 30 (to be further described). The material of panel 14 may have suitable safety or structural features such as shatter-proof, safety glass, etc. Panel 14 may be sized to cover a substantial portion of the roof area to provide the occupants of the vehicle with a panoramic vista when viewing external surroundings from within the vehicle, or panel 14 may be provided in a smaller size such as are typically provided in sun roofs or smaller roof windows (not shown). Panel 14 may be generally flat, curved, or may be contoured into any desired shape to suit the styling, profile or design of the vehicle. The panel 14 may be provided in a clear material, or may be tinted, colored, reflective or provided with other visual modification features desired for the external vehicle appearance and the internal occupant viewing enhancement. For example, the panel may include electrochromic or electro-chemochromic light filtration characteristics. The visual modification features may also be adapted to provide vehicle interior climate control features. For example, panel 14 may have tinted or reflective properties of have other suitable coatings or properties for minimizing the transmission of thermal energy into the vehicle cabin (e.g. minimizing "greenhouse effect") or may be substantially clear for maximizing the transfer of thermal energy into the vehicle cabin (e.g. for promoting a "greenhouse effect"). According to an alternative embodiment, the panel may be a see-though panel that includes a portion that is capable of opening (e.g. sunroof, etc.).

Panel 14 may be provided as a single panel, or may be provided as multiple segments (e.g. sub-panels, etc.) joined together in connection with the elongated members. For embodiments with multiple panel segments, the elongated members are configured to receive each segment and may include a "locator" (e.g. pin, notch, etc.) intended to facilitate placement and positioning (e.g. fit, alignment, support, etc.) of the segments in the proper location on the elongated members. According to a further embodiment with multiple panel segments, the elongated members may be provided in corresponding segments and attached to their respective panel segments. The ends of the elongated member segments may include connectors (e.g. male-female, etc.) arranged to interconnect the elongated member segments (having the corresponding panel segments attached thereto).

Referring further to FIGURES 1 and 2, panel 14 is supported and sealed around its perimeter by upper portions of the vehicle structure such as front header 12, rear header 16 and side pillars or columns 18. According to a particularly preferred embodiment, a mounting system 24 is provided having one or more elongated members 30 (shown schematically as rails, tracks, channels, rods, braces, etc.) to provide structural strength, rigidity and support to panel 14. Elongated members 30 (e.g. rails, tracks, etc.) may be designed with suitable strength characteristics to meet desired design standards for vehicle roofs (e.g. frontal, rear or side collision impact, roll-over, etc.). Elongated members 30 are shown fastened at a first end to a front roof header 12 and at a second end to a rear roof header 16 for supporting an interior portion of the panel 14 and for mounting one or more articles 20 (shown schematically as a compartment, exemplary articles will be further described herein). According to any exemplary embodiment, the elongated members may be used to provide a close-out structure for sunroofs located within the panel and may be used assist in movement and closure of multi-panel roof systems. The mounting system may be supplied in a pre-attached configuration to the panel and may serve as a method to support and transfer the panel from a supplier through the process of assembling the vehicle. According to an alternative embodiment, panels may be provided that cover only a portion of the roof area, and the elongated members may be fastened to any suitable overhead structure in the vehicle including, for example, roof cross bows, headliner structures, etc. According to another alternative embodiment, the elongated members may be attached only to the panel such that they provide a mounting system and add rigidity to the panel. According to a further alternative embodiment, the panel may be of a size, shape or configuration where additional support is not required, and the elongated members may be non-structural members adapted to provide a mounting function for articles to the panel. According to any alternative embodiment, the panels may cover only a portion of the roof area may be supported by and sealed around the panel perimeter to a surrounding vehicle roof segment or other roof support structure.

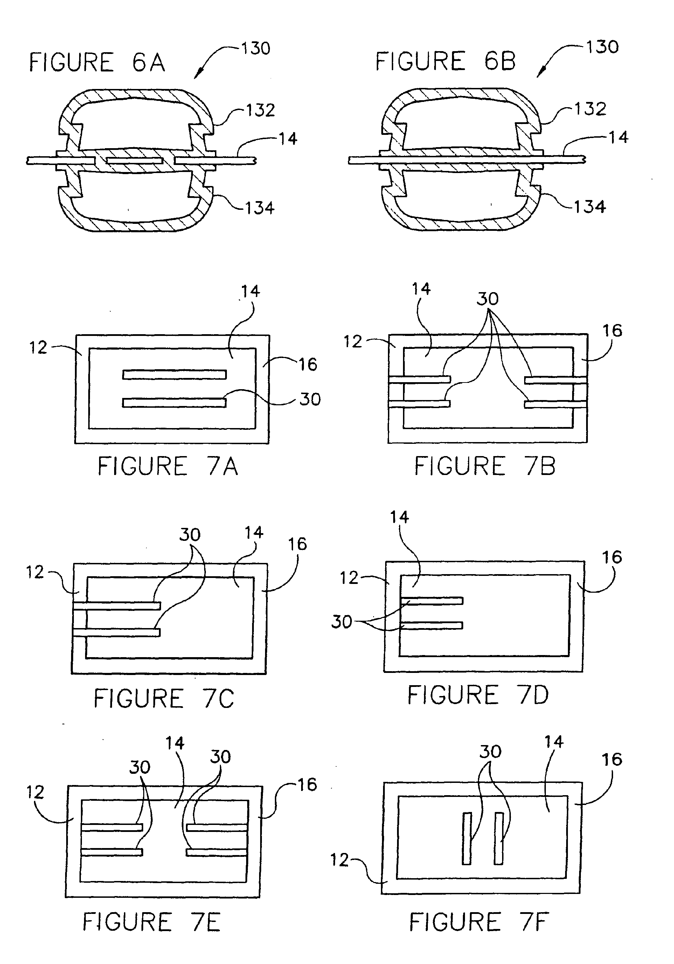

The elongated members 30 may be attached to the panel, or may be integrally formed with the panel. The elongated members when attached to (or formed with) the panel as an assembly may also include extensions 31 that serve as "handles" (shown by way of example as extensions on elongated rails 30 in FIGURE 2, and as rail segments 30 in FIGURES 7B and 7C) for transporting the assembly and for facilitating installation of the assembly in a vehicle (e.g. providing locators, quick-attachment points, etc.). The extensions 31 are also intended to secure the panel assembly relative to the vehicle body structure to facilitate connecting and sealing the perimeter of the panel to the vehicle body by preventing movement or shifting during the curing phase of adhesives and sealants. The extensions are configured to couple to a portion of the vehicle body metal structure (e.g. the "body-in-white"). The elongated members are intended to provide sufficient structural support to the panel and roof portion of the vehicle so that the size of the panel may be increased to include substantially the entire roof area, and to minimize or eliminate conventional supports such as crossbows, beams and the like. For example, the extensions 31 may be secured to the vehicle by welding, bolting at the vehicle manufacturer.

Referring to FIGURES 7A-7F, elongated members 30 may be provided in various arrangements and configurations in relation to the panel 14 and the roof portion of the vehicle. For example, the elongated members may extend laterally (i.e. side-to-side) as shown in FIGURE 7F. The elongated members may also extend along only a portion of the panel (shown for example as a central portion in FIGURE 7A). The elongated members may also be provided in segments. For example, the elongated members segments may include extensions 31 that connect to the roof structure at the front and/or rear and extend inward (see FIGURES 7B and 7C). Also, the elongated member segments may be attached only to the panel (and not the vehicle structure) as shown for example in FIGURES 7A and 7D-7F. In addition, the elongated members may be attached only to the vehicle structure and not directly to the transparent panel. For example, the elongated members may attach to the vehicle structure and extend along (i.e. adjacent to, or in close proximity with) the transparent panel, but not physically attach to the panel, in order to provide increased options for use by vehicle interior designers (see generally Figure 2). The elongated members may also contact the transparent panel to provide support to the panel, or may be substantially free of contact with the transparent panel. Such "non-attached" elongated members may be used in conjunction with transparent panels that are fixed or removable from the vehicle.

According to any exemplary embodiment, the elongated members may be a single member or two members configured in a generally parallel manner and may be oriented longitudinally or laterally within the vehicle. The elongated members may be curved, straight, or have any suitable profile adapted to engage the panel to match the contours of the vehicle. For applications where the elongated members have a curved profile (e.g. arched, bowed, etc.) to match the glass, the articles may include a mating curved profile to permit direct attachment to the elongated members at any convenient location. Alternatively, a separate interface piece (e.g. adaptor, etc.) may be provided to fit between the elongated member and the article to facilitate attachment of the article to the elongated member.

Referring to FIGURES 6A and 6B, elongated members 130 are shown for use with the panel 14 according to another embodiment. Elongated members 130 are shown to include both an internal portion 134 (i.e. within the interior space of the vehicle) and an external portion 132 (i.e. along an surface of the panel external to the vehicle interior). According to the illustrated embodiment, the internal portion 134 and the external portion 132 are arranged to "sandwich" the panel(s) 14 therebetween. The elongated members 130 thus provide structure for supporting the panel(s) 14 and include the internal portion 134 for attachment of articles within the vehicle interior and also include the external portion 132 which may receive articles for attachment to the roof exterior (e.g. in the manner of a "luggage rack" or the like). The external portion may be configured with any suitable shape and features, such as slots, grooves, apertures, recesses, hooks, tie-downs and the like to facilitate "temporary" attachment of articles on the exterior of the roof (e.g. cargo, luggage, etc.). As shown in FIGURE 6A, the internal portion 134 and the external portion 132 may be separate elements that are interconnected through the panel(s) 14, or the internal portion 134 and the external portion 132 may also be integrally formed directly with the panel(s) 14. As shown in FIGURE 6B, the internal portion 134 and the external portion 132 may be separate elements that are attached to (or formed on) the panel(s) 14.

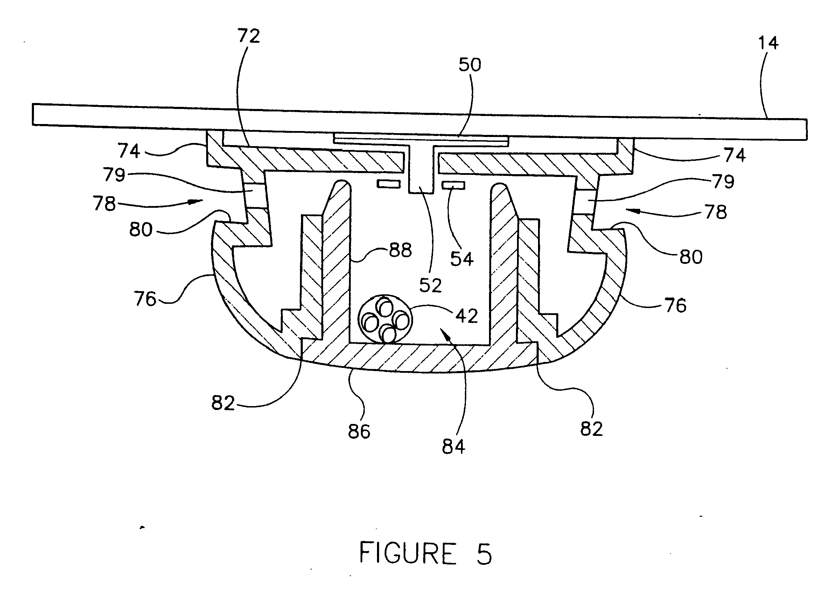

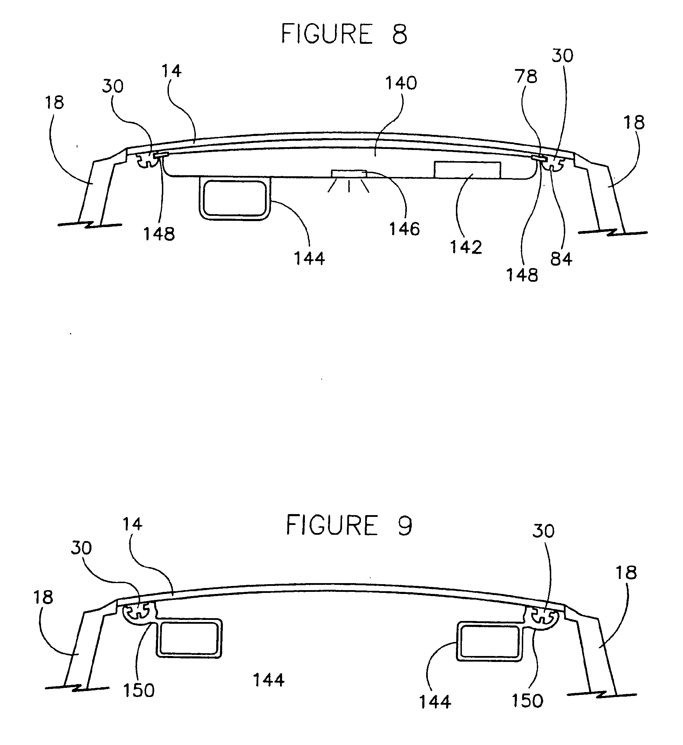

Referring to FIGURE 8, the elongated members 30 are shown mounted along the sides of the panel(s) 14 according to another embodiment. The elongated members 30 are shown mounted along the laterally outward edges of the panel(s) 14 to facilitate mounting of an article in the form of a carriage 140 that extends generally from one side of the vehicle interior to the other side of the vehicle interior. The carriage 140 is configured to include (or receive) other articles, such as storage bins 142, media devices 144, lighting devices 146, instrumentation, etc. as described more extensively herein). The carriage 140 includes projections 148 that extend laterally outward and slidably engage the elongated members 30. For example, the projections may engage recess 78 (on the "inside or "outside" of the elongated member), or may engage longitudinal opening 84. The projections may include any suitable device to facilitate a sliding interface with the elongated members, such as a low-friction slide/glide material, ball bearings, bushings or the like. The projections may also be fitted with a positioning device that "locks" or "sets" the carriage in a desired position along the length of the elongated members. The positioning device may include spring-biased pins, projections or other elements that releasably engage detents, recesses, etc. (shown for example as apertures 79 in FIGURE 5) spaced along the length of the elongated members 30.

Referring to FIGURE 9, the carriage may be replaced with individual carrier elements 150 arranged engage any one (or more) of recesses 78 and opening 84 to slide along a respective elongated member 30. The carrier elements 150 may be arranged to interchangeably receive other articles for use by the vehicle occupants. Alternatively, the carrier elements by integrally formed with the articles for use in any vehicle (including any vehicle style or model) having at least one of the elongated members installed therein. According to an alternative embodiment, the elongated members may be installed within (or attached to) the lateral sides of the vehicle roof structure adjacent to the panel(s). According to any embodiment, the elongated members as shown in FIGURES 8 and 9 may be provided as singular elongated members, or may be provided in one or more segments (as shown generally in FIGURES 7A-7F).

Referring further to FIGURE 1, panel 14 is shown according to any preferred embodiment and may be provided with a shielded section 22 (e.g. tinted, colored, blacked-out, etc.) to conceal or partially conceal the presence of the elongated members 30 when viewed from a location external to the vehicle. The shielded section 22 may have any suitable size and orientation adapted to provide shielding of the elongated members 30. In a further alternative embodiment, a shielded section may be omitted and the elongated members may be shaped or colored to provide a desired accessory appearance to the panel. In other alternative embodiments, the panel may be selectively removable from the vehicle, either with or without the elongated members, to provide an open or partially open vehicle environment.

Shielded section 22 may also be provided as (or include) a frit on the panel, and may correspond with all, or just a portion, of the location of the elongated members on the panel. For example, in an embodiment with two rails, a common area of frit may "cover" both rails, or the frit may be provided in any of a wide variety of patterns, such as separately covering all or a portion of each rail, etc. According to one embodiment, the frit may be a conductive frit, such as a silver conductive frit, intended to provide a conductive path for delivering electrical power or signals from a supply source to an elongated member(s) and/or an article mounted on an elongated member(s).

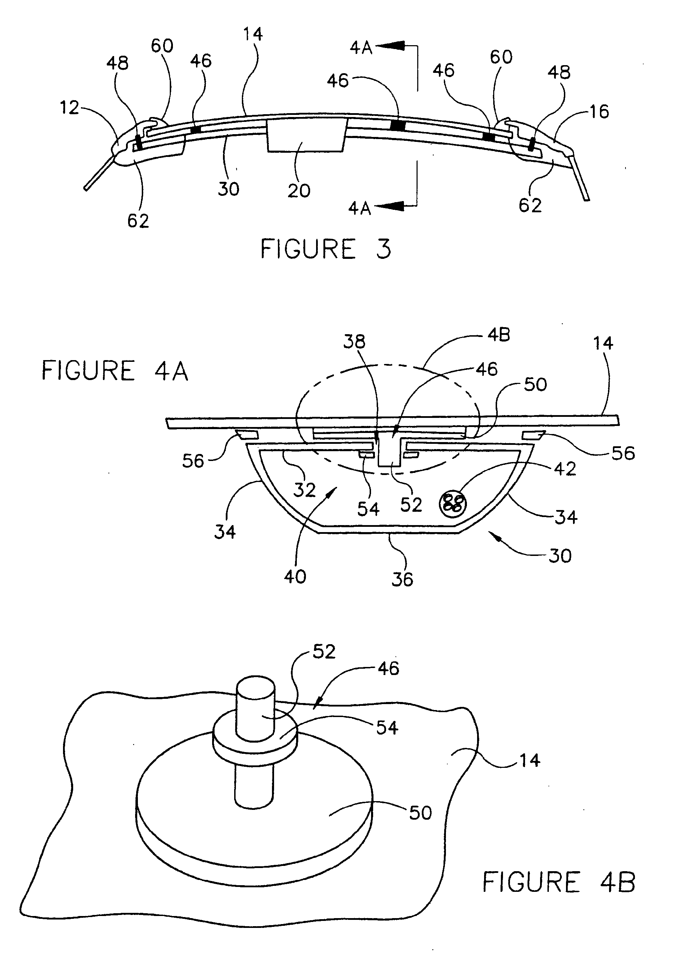

Referring to FIGURES 3 and 4, the structural shape of elongated members 30 are shown according to one embodiment. Elongated members 30 are shown having a generally hollow cross sectional shape (as shown in FIGURE 4), and include a generally flat base 32 (e.g. back, contact surface, etc.) on the top of the elongated member 30. Base 32 is joined to side portions 34 that extend downward to a lower portion 36 to form a cross sectional shape of the elongated member (shown schematically as generally trapezoidal). The side portions 34 of the elongated member 30 may be curved, angled, or provided with notches or recesses adapted to receive articles 20. The lower portion 36 may be made as a detachable center strip or may be unitarily formed with the base 32 and side portions 34. In a particularly preferred embodiment, the elongated members are made from an acrylonitrile butiadene styrene (ABS) plastic in an extrusion process, and may be provided in a wide variety of colors designed to accent a vehicle trim or panel color scheme. According to an alternative embodiment, the elongated members and the cap may be made of aluminum or any other suitable material that provides the desired properties (e.g. strength, conductivity, weight, formability, etc.), wherein the elongated members or the cap may also serve as a conductor for transmitting low voltage electrical power from a vehicle supply source (not shown) to the articles mounted on the elongated members. According to another alternative embodiment, the cross sectional shape of the elongated member may have other forms such as I-beam shaped, circular, rectangular, triangular, half-moon shaped, etc. The hollow shape of elongated members 30 provides a passageway 40 (e.g. channel, path, conduit, tunnel, etc.) through which utility carriers 42 such as wires, cables, fiber optics, etc. may be routed for distributing electrical power to vehicle components or to the articles 20. According to a further alternative embodiment, the elongated members may be provided as a multi-piece structure (e.g. sections, segments, etc.) which may include connectors adapted to join the sections of the multi-piece structure as needed. Such connectors may include straight connectors, right angle connectors, and partial angle connectors.

As shown in FIGURE 3, the longitudinal profile of the elongated members 30 may be contoured (e.g. arched, bowed, curved, angled etc.) to match the contour of the panel 14 along the entire length or a partial length of the panel 14, and to provide the desired support and strength properties. According to an alternative embodiment, the elongated members may be further provided with retaining structure to secure the location of articles mounted on the rails from moving in the event of a collision, rapid stops, or other abrupt vehicle maneuvers. Such retaining structure may be in the form of a series of slots, recesses, projections, hooks, high-friction surfaces or other structure or features designed to prevent the articles from shifting along the rails or unintentionally detaching from the rails. According to a further alternative embodiment, the elongated members may be provided with conductive features such as metallic strips or inserts that provide a conductive path for delivering utilities to the articles. Such conductive features may be provided along the length of the elongated member or may be configured to provide conductive windows or junction points at selected locations for interfacing with certain articles.

Referring to FIGURES 3 and 4A, elongated members 30 are coupled to the panel 14 by connectors 46 at various positions along the panel 14 to provide structural support to the panel. The end portions of the elongated members are connected to the vehicle structure (shown schematically as front header 12 and rear header 16) by fasteners 48 (e.g. threaded fasteners, Z-axis clips, welding, brazing, rivets, etc.) to attach (e.g. fasten, fix, secure, anchor, etc.) the ends of the elongated members 30 to the vehicle. According to an alternative embodiment, the end portions of the elongated members may be removably attached to the vehicle structure to facilitate removal of the roof panel and the elongated members as a single unit. For example, connectors such as quick-disconnects, quarter-turn latches, buckles, slide-locks, etc. may be used to connect the ends of the elongated members to the vehicle.

Referring further to FIGURE 3, the elongated members 30 are shown joined to the panel 14 by one or more connectors 46 positioned longitudinally along an interior segment of elongated member 30 and panel 14 to join the elongated members 30 to the panel 14. As shown schematically in FIGURES 4A-4B, connectors 46 include a panel interface portion 50 configured for attachment to (and support of) the panel 14 by any suitable method shown as adhesive bonding, but may also include slide-fit, snap-fit, twist-lock connection, etc. or other suitable device to facilitate rapid installation techniques or decoupling of the elongated members 30 and panel 14. Connector 46 includes an extension portion 52 (e.g. post, projection, etc.) that extends downwardly and in a securing relationship with the base 32 of elongated member 30. Extension portion 52 includes a fastening section for joining the elongated member 30 and the panel 14. According to a particularly preferred embodiment, the fastening section of extension portion 52 is a threaded section that extends through an opening 38 in base 32 for engagement with a threaded collar 54.

Referring further to FIGURE 4B, connector 46 may also be used for connecting any other component or article to the panel 14. For example, in an embodiment where the panel 14 is a glass panel, interface portion 50 may be bonded to panel 14 using any suitable adhesive (e.g. glue, bonding agent, epoxy, etc.). so that post 52 and/or collar 54 are arranged to receive and secure any of a wide variety of articles to the panel 14. According to a further embodiment, connector 14 may be used as an "adaptor" for receiving other articles, by attaching the interface portion at any desired location on the glass and configuring the post 52 and/or collar 54 to mat with, or receive, a corresponding structure on a component or article to be installed on the panel at the desired location.

Referring further to FIGURE 4A, the laterally outward ends of elongated member 30 are fitted with a trim member 56 shown schematically as a gasket strip for providing a seal between the base 32 and the panel 14. Trim member 56 is preferably resilient and weather-resistant to accommodate the typical temperature changes associated with vehicle roof applications and may be made of a material such as rubber, polymer, foam, or other suitable gasket material. Trim member 56 may be provided in any suitable shape or color to enhance the aesthetic appearance of the elongated member and panel. According to an alternative embodiment, the connector may be a friction-type or snap-fit connector, such as a Z-axis clip-type connector, finned-plug (e.g. Christmas tree connector) or other type of connector that is engagable by a press-fit or other quick-installation engagement. According to another alternative embodiment, the elongated members may provide contact-type support to the panel without the use of connectors to facilitate removal of the panel by a user to create an open or partially open vehicle top environment in which the elongated members and articles remain available for use by the vehicle user. According to an alternative embodiment, the elongated members may be chemically adhered to the panels (e.g. adhesives, chemical bonds, etc.).

Referring further to FIGURE 3, suitable trim members 60 are provided around the perimeter of the panel 14 to seal the panel to the vehicle structure (shown schematically at the front and rear of the roof portion) according to a preferred embodiment. The trim members 60 may be any suitable sealing material such as rubber, polymer, resin materials, etc. and may be attached primarily to the perimeter of panel 14 or to the vehicle structure. A cover 62 (e.g. bezel, trim, molding, etc.) is preferably provided at each end of the elongated member 30 to provide a smooth and aesthetic appearance for the junction between the ends of the elongated members 30 and the vehicle structure. The covers may be attached directly to the vehicle structure (e.g. front header, rear header, headliner, etc.) or may be attached to the elongated members. According to an alternative embodiment, trim covers may be omitted and the elongated members may have end portions that are configured in a suitable shape or structure for housing vehicle functional elements such as instruments or for providing storage space.

Referring to FIGURE 5, the structural shape of the elongated members are shown according to another exemplary embodiment. Elongated members 70 have a generally hollow cross sectional shape with a generally flat base 72 with several longitudinal ribs 74 projecting therefrom. Connectors 46 may be provided (as previously described) for joining the elongated members 70 to the panel 14 and fasteners may be provided (as previously described) for joining the elongated member 70 to the vehicle structure. Ribs 74 are provided at the outward lateral edges of elongated member 70 to trim the space between the base 72 and the panel 14. Elongated members 70 further include sides 76 having a recess 78 (e.g. notch, inset, slot, groove, channel, etc.) forming an outwardly projecting supporting ledge 80 (e.g. corner, shoulder, edge, etc.). Recesses 78 and ledges 80 provide an external structure for receiving and supporting the articles 20 (shown schematically) having corresponding structure adapted to mate with ledges 80. According to a particularly preferred embodiment, ledge 80 is horizontal (as shown) and ledge 80 and recess 78 are formed having an angle of 90 degrees or less for providing a structure for receiving articles 20. According to an alternative embodiment, the elongated member may have a circular cross sectional shape (not shown) or any other shape where the exterior surface is configured to provide longitudinal recesses and ledges for receiving and supporting the articles. According to another alternative embodiment, the elongated member may have a second recess and ledge (not shown) for providing an alternative article mounting interface and providing structure adaptable for mounting interlocks that may prohibit or allow installation of certain articles along particular locations of the elongated members.

Referring further to FIGURE 5, a system for distributing electricity is shown according to an exemplary embodiment. Beneath ledges 80, sides 76 include inwardly curved lower sections that terminate into a return bend providing internal corners 82 to create a longitudinal opening 84. Opening 84 creates a passage (e.g. channel, path, conduit, tunnel, etc.) within elongated member 70 for routing utility carriers such as wires, cables, fiber optics, etc. A removable cap 86 is provided generally along the entire length of elongated member 70 to cover opening 84 and retain utility carriers, and may have a flush fit with elongated member 70, or may have projecting contours, ribs, or other decorative or useful structure (not shown). Cap 86 includes two inwardly projecting legs 88 that fit within opening 84 and are removably retained in place by an interference type, snap-fit engagement. Opening 84 may be entirely or partially concealed by inserting one or more caps 86 having segments of various lengths tailored to create an access pattern within elongated members 70. The access pattern may be created or modified at any time for selectively providing access to opening 84 along the length of elongated member 70. Elongated member 70 and cap 86 may be made of acrylonitrile butiadene styrene (ABS) plastic in an extrusion process, and may be provided in a wide variety of colors designed to accent an interior trim color scheme. According to an alternative embodiment, the elongated members and the cap may be made of aluminum or any other suitable material, wherein the elongated members or the cap may also serve as a conductor for transmitting low voltage electrical power from a vehicle supply source (not shown) to the articles mounted on the elongated members. For applications where the elongated members are made of aluminum, the outer surface of the aluminum is preferably anodized which provides an insulating layer on the exterior of the elongated member 70, which may be selectively removed to provide a custom-tailored electrical conductivity access pattern. Portions of elongated members 70 and cap 86 that are not otherwise enclosed by articles 20 may also have a separate insulating cover (not shown) that snap fits into recesses 78 and ledges 80 to electrically isolate elongated members 70 from consumer contact or inadvertent contact with an electrical ground. Elongated members 70 and cap 86 may also be made of any other material suitable for forming an elongated support member and receiving mounting structure from articles 20 to be supported therefrom.

Referring further to FIGURE 2, a variety of articles 20 may be mounted to elongated members 30, 70 according to a preferred embodiment. Articles 20 may include storage compartments (with or without key-lock access control) tailored to hold tissues, sunglasses, remote control devices, wireless phones, pagers, personal data assistants (PDA), walkie-talkies, binoculars, cameras, first aid or road-side emergency kits, tools, baby-care products and supplies, arts and crafts supplies, toys, sporting goods, books, maps, hunting and fishing equipment, and many other articles for which readily accessible storage in a vehicle may be useful. Such storage compartments may either be fixed or designed for pull-down, drop-down or rotational access where the compartment is recessed during storage and extended for access during usage. Articles 20 may also include handles, brackets, fixtures (e.g. starter block) for mounting racks, cages, or support pillars for optionally receiving members to mount additional articles 20 in a cargo area, lighting equipment, power adapters and outlets, lighters; visual display screens; audio equipment; media displays; digital video disc players; GPS receivers; cargo storage racks, straps or tie-downs; garment hangers, rods or racks; insulated hot or cold-storage containers, mobile office workstation components, portable air compressors or vacuum cleaners, cargo netting and holders; occupant safety features; specially-adapted consumer-use products such as travel tables, camping gear, pet barriers, luggage, etc.; brackets having rigid, swiveling or rotating couplers for removably receiving such consumer use products; storage racks having fixed or retractable support members for storing skis or other gear; and any other articles which may be useful in conjunction with traveling, working or other vehicle use.

Articles 20 are adapted to be selectively positionable along elongated members 30, 70 however, articles that may deemed to create a distraction to the vehicle operator, such as video displays and the like, are preferably provided with a mounting interlock feature which prevents their installation in certain prohibited positions along the members, for example, allowing video monitors to be installed only in a rearward portion of the vehicle. The interlock function may be accomplished by altering the cross sectional shape or profile of a portion of the elongated members (not shown) or providing a second recess and ledge (not shown). Particular articles 20 may be provided with a mounting profile for engaging the elongated members 30, 70 that includes a projection (not shown) that extends into passage 78 whereby installation of a blank (not shown) within a particular portion of opening 40, 84 along elongated member 30, 70 will prevent mounting such articles in the selected locations. Alternatively installation of articles may be selectively restricted by otherwise altering the profile of the elongated members to fit only selected article mounting profiles and may be accomplished by adding a shim (not shown) along one or more sides of elongated member 30, 70 or in connection with the passageway of the member.

In yet another alternative embodiment, the articles may be provided with fasteners (e.g. set screws, quarter-turn locks, slide locks, etc.) that may be loosened for installation of article 20 on elongated members 30, 70 and then the fastener may be tightened to secure the article to the member, or loosened for subsequent repair, replacement, or reorientation within the vehicle.

Utilities may be distributed from a vehicle supply source (not shown) via utility carriers 42 that interface with articles 20. The utility carriers 42 may be distributed throughout system 10 by routing the utility carriers 42 through passage 40, 84 in elongated members so that the utility carriers 42 are concealed. Articles 20 are mounted over elongated members 30, 70, whereby one or more gaps or other openings corresponding to access and egress locations for the utility carriers 42, interfacing with articles 20 may be provided behind article 20, to create a utilities access pattern. The access pattern is adaptable to future changes or modifications in the article selection package by making suitable changes in the elongated members 30, 70. Articles 20 and utility carriers 42 may be provided with mating connectors (not shown) to facilitate ease of installation, replacement or reconfiguration of articles 20 within the system 10. According to an alternative embodiment, articles 20 may be provided with a fixed length of utility carrier for routing through passage 40, 84 to the vehicle supply source. To provide additional flexibility in distributing utilities to various articles, an article 20 may be configured to serve as a utility storage or junction box for housing additional utility distribution devices or components and for storing excess quantities of utility carrier that may be desirable for accommodating future changes to the article selection package.

According to any exemplary embodiment, low-voltage electrical power in the range of approximately 12-42 volts DC or other suitable voltage range for powering articles may be routed to the articles via the elongated members, where the elongated members are fabricated entirely or partially from aluminum or other electrically conductive material. The elongated members may also be fabricated from a non-conducting material such as plastic, where a conducting material such as copper or aluminum is integrally formed with the elongated member in the shape of a longitudinal conducting strip, rail or bar (not shown) to provide a uniform electric current access path from the vehicle supply source to the articles. Such conducting material may be affixed to the elongated member by ultrasonic welding, molding, interference-type snap insert, or vacuum metallization. The articles are provided with an electrically conductive contactor that projects outwardly from a surface of the article and is configured to contact the elongated member or a conducting strip thereon and remains concealed between the elongated member and the article when the article is installed on the elongated member to provide a conductive electrical path to the article. The contactor may be spring-biased for urging the contactor into continuous contact with the elongated member or a conducting strip when the article is mounted on the elongated member. In a preferred embodiment where a system with two parallel members are used, one elongated member would have a positive electrical polarity (i.e. battery potential) and the second elongated member would have a negative electrical polarity (i.e. ground). For embodiments using a single member, two longitudinal conducting strips (not shown) may be used on the elongated member to provide positive and negative conductors, corresponding to appropriately positioned contactors on an article configured to mount to a single elongated member.

Conducting strips (not shown) may be used as an article positioning interlock along the elongated members by altering the conducting strip longitudinal position along the elongated member to provide a power interlock profile. The power interlock profile ensures that contactors for certain articles will properly interface with the conducting strips only when articles are installed at locations on the elongated members corresponding to a mating conducting strip position. For example, video display articles may have contactors positioned to match a conducting strip position corresponding only to a location rearward of the front seats of the vehicle. Similarly, other consumer articles that may create a distraction to a vehicle operator may be electrically interlocked so that they are operable only when installed in positions that are preestablished by the power interlock profile. Insulating cover segments may be provided that are adapted to cover portions of the elongated members that remain exposed after installation of the article selection package to prevent consumer exposure or electrical shorts to ground with the energized portions of the system.

It is important to note that the construction and arrangement of the elements of the overhead system for a vehicle provided herein is illustrative only. Although only a few exemplary embodiments of the present invention have been described in detail in this disclosure, those skilled in the art who review this disclosure will readily appreciate that many modifications are possible in these embodiments (such as variations in installation location and orientation within a vehicle, sizes, structures, shapes and proportions of the various elements, mounting arrangements, use of materials, colors, combinations of shapes, etc.) without materially departing from the novel teachings and advantages of the invention. For example, the overhead system may be used in the interior of any vehicle (such as an automobile, truck, sport utility vehicle, van, boat, airplane, train, construction or farming equipment, tractor trailer trucks, motor homes and recreational vehicles, etc.). According to other alternative embodiments, the overhead system may be used in connection with articles such as camping gear that are designed to adapt to a stationary vehicle environment. Further, it is readily apparent that the panel may be provided in any shape, size, or with any material or light transmission characteristics, and may cover either a small area or a substantial area of the vehicle roof. It is also readily apparent that the elongated members may be provided in a wide variety of strength characteristics, profile curvatures, shapes, sizes, thickness, and engagement profiles and adapted for installation along, or in conjunction with, the roof panel of the vehicle. The elongated members may provide structure, support or strength to the panel, or may serve solely to provide an attachment interface between the panels and various articles. The elongated members may also be attached solely to the vehicle structure and may extend along (but not directly attach to) the transparent roof panel. It is also readily apparent that the articles may be designed with any profile suitable for attaching to one or more elongated members and may be adapted for slidable movement or fixed installation along the elongated members. Accordingly, all such modifications are intended to be within the scope of the invention as defined in the appended claims.

The order or sequence of any process or method steps may be varied or re-sequenced according to alternative embodiments. In the claims, any means-plus-function clause is intended to cover the structures described herein as performing the recited function and not only structural equivalents but also equivalent structures. Other substitutions, modifications, changes and omissions may be made in the design, operating configuration and arrangement of the preferred and other exemplary embodiments without departing from the spirit of the present inventions as expressed in the appended claims.

## Claims

1. An overhead system for a vehicle, comprising:
a substantially transparent panel adapted to cover a portion of a roof area of the vehicle;
a pair of elongated members adapted to couple to at least one of the transparent panel and a structural portion of the vehicle;
wherein the pair of elongated members is configured to receive a carriage for movement at least partially along a length of the pair of elongated members.

2. The overhead system of Claim 1 wherein the carriage includes at least one article for use by an occupant in the vehicle.

3. The overhead system of Claim 1 wherein the pair of elongated members are provided in segments.

4. The overhead system of Claim 1 wherein the pair of elongated members are attached to the transparent panel by an adhesive.

5. The overhead system of Claim 1 wherein the pair of elongated members are integrally formed with the panel.

6. The overhead system of Claim 1 wherein the pair of elongated members are coupled to the transparent panel and the structural portion of the vehicle and configured to provide substantially the entire support for the transparent panel.

7. The overhead system of Claim 1 wherein the pair of elongated elements are attached to the transparent panel, and include extensions configured to engage the structural portion of the vehicle.

8. The overhead system of Claim 7 wherein the extensions serve as a handle to facilitate transport of an assembly comprising the transparent panel and the pair of elongated members to a vehicle manufacturing facility.

9. The overhead system of Claim 8 wherein the extensions serve as locators for installing the assembly in a vehicle at the vehicle manufacturing facility.

10. The overhead system of Claim 1 wherein the elongated members are provided as rails.

11. The overhead system of Claim 1 wherein the pair of elongated members each include an interior portion disposed on a side of the transparent panel facing toward the vehicle interior and an exterior portion disposed on a side of the transparent panel facing away from the vehicle interior.

12. The overhead system of Claim 11 wherein the exterior portion is configured to at least temporarily secure cargo items.

13. The overhead system of Claim 1 further comprising a conductive frit layer disposed on the transparent panel and configured to transmit electricity from a supply source to at least one of the pair of elongated members.

14. The overhead system of Claim 1 wherein the pair of elongated members are spaced apart on opposite lateral sides of the transparent panel.

15. An overhead system for a vehicle, comprising:
a substantially transparent panel adapted to cover a portion of a roof area of the vehicle;
an adaptor having an interface portion configured for attachment to the transparent panel by an adhesive material, and a fastening section extending from the interface portion; and
an article coupled to the fastening section and supported from the transparent panel by the interface portion.

16. The overhead system of Claim 15 further comprising at least one elongated member secured to the panel by the fastening section and configured to receive the article.

17. The overhead system of Claim 15 further comprising a conductive frit layer disposed on the glass in a pattern configured to provide a conductive path to the article.

18. An overhead system for a vehicle, comprising:
at least one substantially transparent panel adapted to cover a portion of a roof area of the vehicle;
at least one rail adapted to couple to at least one of the transparent panel and a structural portion of the vehicle;
a carrier element configured to slidably engage the rail and interchangeably receive one or more articles for use by an occupant of the vehicle.

19. The overhead system of Claim 18 wherein the transparent panel comprises a plurality of transparent panel segments.

20. The overhead system of Claim 19 wherein the rail is provided as a plurality of segments that correspond with the transparent panel segments and that are interconnectable to form an integrated overhead system assembly of the transparent panel segments and the rail segments.

21. The overhead system of Claim 18 wherein the carrier element engages at least one recess on the rail.

22. The overhead system of Claim 18 wherein the at least one rail comprises two rails spaced apart at opposite lateral sides of the transparent panel.

23. The overhead system of Claim 22 wherein the two rails each include an interior portion disposed on a side of the transparent panel facing toward the vehicle interior and an exterior portion disposed on a side of the transparent panel facing away from the vehicle interior.

24. The overhead system of Claim 23 wherein the exterior portion is configured to at least temporarily secure cargo items.

25. The overhead system of Claim 18 further comprising a conductive frit layer disposed on the transparent panel and configured to transmit electricity from a supply source to the rail.

26. The overhead system of Claim 18 wherein the rail comprises at least a portion that is conductive and configured to provide power to the article.

27. An overhead system for a vehicle, comprising:
at least one substantially transparent panel adapted to cover a portion of a roof area of the vehicle;
at least one rail adapted to couple to at least one of the transparent panel and a structural portion of the vehicle;
wherein the rail includes a first portion disposed on a first side of the transparent panel and configured to receive articles for use within the vehicle interior, and a second portion disposed on a second side of the transparent panel and configured to secure cargo items to an exterior of the vehicle.

28. The system of Claim 27 wherein the first portion and the second portion are integrally formed with the transparent panel.

29. The system of Claim 27 wherein the first portion and the second portion are separate portions attached to opposite sides of the transparent panel.

30. The system of Claim 27 wherein the first portion and the second portion are separate portions interconnected through the transparent panel.

31. An overhead system for a vehicle, comprising:
at least one substantially transparent panel adapted to cover a portion of a roof area of the vehicle;
at least one rail coupled to the transparent panel and having a first extension extending from one end of the transparent panel and a second extension extending from another end of the transparent panel;
wherein the extensions are configured for attachment to a structural portion of the vehicle to support the transparent panel.

32. The system of Claim 31, wherein the extensions are configured for use as handles for transporting and handling the transparent panel.

33. The system of Claim 31 wherein the attachment of the extensions to the structural portion of the vehicle provides substantially the entire support for the transparent panel when installed in the vehicle.

34. An overhead system for a vehicle, comprising:
a substantially transparent panel adapted to cover a portion of a roof area of the vehicle and at last partially surrounded by a structural portion of the vehicle;
at least one elongated member coupled to the structural portion of the vehicle and extending along the transparent panel;
wherein the elongated member is configured to permit coupling of at least one article for use within the vehicle.

35. The system of Claim 34 wherein the elongated member is attached to the transparent panel.

36. The system of Claim 34 wherein the elongated member is configured to interchangeably receive a plurality of articles for use within the vehicle.

37. The system of Claim 34 wherein the at least one elongated member comprises two rails, and further comprising a carriage for movement at least partially along a length of the rails, and wherein the carriage is configured to receive the article.

38. The system of Claim 37 wherein the rails are configured to interchangeably receive a plurality of articles.

39. The system of Claim 37 wherein the rails are substantially free of contact with the transparent panel.
